# EUROPEAN PATENT APPLICATION

(11) **EP 4 057 401 A1**
(43) Date of publication of application: **14.09.2022**
(21) Application number: 19951820.0
(22) Date of filing: 07.11.2019
(51) Int. Cl.: H01M 8/12, H01M 8/1213, H01M 8/1286

(54) **FUEL BATTERY CELL AND METHOD FOR MANUFACTURING FUEL BATTERY CELL**

(71) Applicant: Hitachi High-Tech Corporation, Minato-ku Tokyo 105-6409 (JP)
(72) Inventor: SAKUMA, Noriyuki, Tokyo 100-8280 (JP); SASAGO, Yoshitaka, Tokyo 100-8280 (JP); ANZAI, Yumiko, Tokyo 100-8280 (JP); MIGITAKA, Sonoko, Tokyo 100-8280 (JP); YOKOYAMA, Natsuki, Tokyo 100-8280 (JP); TSUTSUMI, Takashi, Tokyo 105-6409 (JP); SUGIMOTO, Aritoshi, Tokyo 105-6409 (JP); ARAMAKI, Toru, Tokyo 105-6409 (JP)
(74) Representative: Strehl Schübel-Hopf & Partner
(86) International application number: PCT/JP2019/043590
(87) International publication number: WO 2021/090424

(57) **Abstract**

An object of the present invention is to provide a fuel battery cell of a high power generation output by increasing an area of an effective power generation region contributing to power generation while ensuring mechanical strength of the fuel battery cell. The fuel battery cell according to the present invention is provided with a first and a second insulating films between a support substrate and a first electrode. The support substrate has a first opening, the first insulating film has a second opening, and the second insulating film has a third opening. An opening area of the first opening is larger than that of the second opening, and an opening area of the third opening is larger than that of the second opening (see FIG. 2).

## Description

### Technical Field

The present invention relates to a fuel battery cell.

### Background Art

In recent years, fuel cells have attracted attention as clean energy sources capable of high energy conversion and not discharging pollutants such as carbon dioxide gas and nitrogen oxides. Among fuel cells, a solid electrolyte fuel cell (hereinafter, abbreviated as SOFC (Solid Oxide Fuel Cell)) has high power generation efficiency and can use gases such as hydrogen, methane, and carbon monoxide, which are easy to handle, as a fuel. Therefore, the solid electrolyte fuel cell has many advantages as compared with other systems, and is expected as a cogeneration system which is excellent in energy saving and environmental performance. The SOFC has a structure in which a solid electrolyte is sandwiched between a fuel electrode and an air electrode, and fuel gas such as hydrogen is supplied to the fuel electrode side using the electrolyte as a partition wall, and air or oxygen gas is supplied.

In PTL 1, a through window is formed in a single crystal silicon substrate, and a manifold substrate supplied from a fuel gas reformer is connected to a substrate in which a porous thick film, a fuel electrode, an electrolyte film, and an air electrode are stacked in this order in a through window. This document provides a silicon-based SOFC capable of low-temperature operation (350 to 600°C) with this structure.

The silicon-based SOFC disclosed in PTL 1 has a set of electrodes including an anode and a cathode via a thick film porous structure having mechanical strength on a substrate provided with a through window. Further, a thin film electrolyte is provided between the electrodes. The thick film porous structure in the same document is provided with pores serving as a gas flow path, but the pores are made sufficiently small so that the inside of the pores is not blocked by the electrode material formed on the thick film porous structure.

### Citation List

### Patent Literature

PTL 1: JP 2005-532661 A

### Summary of Invention

### Technical Problem

In PTL 1, the through window provided in the silicon substrate is larger than the pore provided in the thick film porous structure, and the pore in the manifold substrate is larger than the through window in the silicon substrate. Therefore, there is a problem that the flow path of the fuel gas becomes narrower from the pores in the manifold substrate toward the electrode on the thick film porous structure, the effective area of the small pores of the thick film porous structure contributing to power generation narrows, and the power generation amount per substrate decreases.

The present invention has been made in view of the above problems, and an object of the present invention is to provide a fuel battery cell having a high power generation output by increasing an area of an effective power generation region contributing to power generation while ensuring mechanical strength of the fuel battery cell.

### Solution to Problem

A fuel battery cell according to the present invention is provided with a first and a second insulating films between a support substrate and a first electrode. The support substrate has a first opening, the first insulating film has a second opening, and the second insulating film has a third opening. An opening area of the first opening is larger than that of the second opening, and an opening area of the third opening is larger than that of the second opening.

### Advantageous Effects of Invention

According to a fuel battery cell of the present invention, it is possible to increase an area of an effective power generation region contributing to power generation while ensuring the mechanical strength of the fuel battery cell. Other objects and novel features will become apparent from the description of the specification and the accompanying drawings.

### Brief Description of Drawings

[FIG. 1] FIG. 1 is a plan view of a fuel battery cell 1 according to a first embodiment.
[FIG. 2] FIG. 2 is a cross-sectional view taken along line A-A in FIG. 1.
[FIG. 3] FIG. 3 is a cross-sectional view of a main part taken along line A-A in FIG. 1 in a manufacturing process of the fuel battery cell 1.
[FIG. 4] FIG. 4 shows a next manufacturing process of the fuel battery cell 1.
[FIG. 5] FIG. 5 shows a next manufacturing process of the fuel battery cell 1.
[FIG. 6] FIG. 6 shows a next manufacturing process of the fuel battery cell 1.
[FIG. 7] FIG. 7 illustrates a result of evaluating a deflection amount by changing an area of a second opening 9 with respect to a third opening 10.
[FIG. 8] FIG. 8 is a cross-sectional view of the fuel battery cell 1 according to a second embodiment.
[FIG. 9] FIG. 9 is a plan view of the fuel battery cell 1 according to a third embodiment.
[FIG. 10] FIG. 10 is a cross-sectional view taken along line B-B in FIG. 9.
[FIG. 11] FIG. 11 is a plan view of the fuel battery cell 1 according to a fourth embodiment.
[FIG. 12] FIG. 12 is a cross-sectional view taken along line C-C in FIG. 11.
[FIG. 13] FIG. 13 is a cross-sectional view of the fuel battery cell 1 according to a fifth embodiment.
[FIG. 14] FIG. 14 is a plan view of the fuel battery cell 1 according to a sixth embodiment.
[FIG. 15] FIG. 15 is a cross-sectional view taken along line D-D in FIG. 14.
[FIG. 16] FIG. 16 is a side cross-sectional view for explaining a configuration of a fuel battery system according to a seventh embodiment.

### Description of Embodiments

### <First Embodiment>

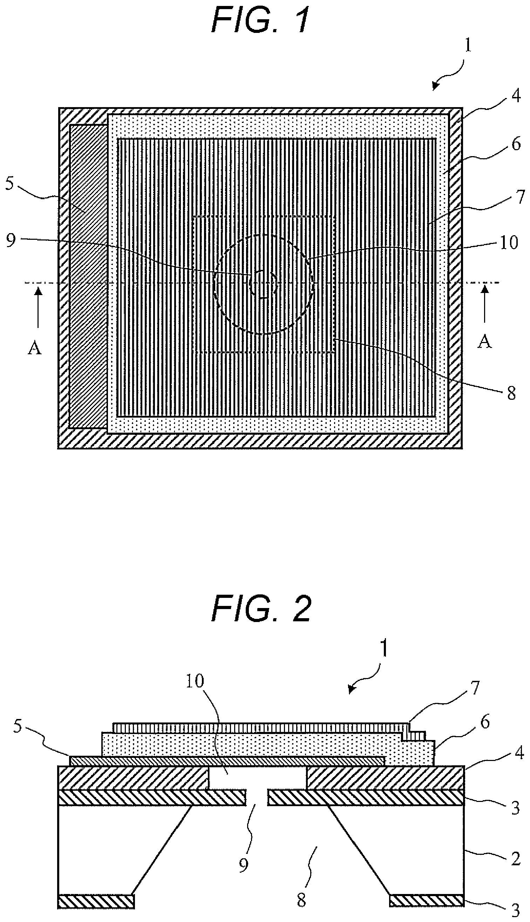

FIG. 1 is a plan view of a fuel battery cell 1 according to a first embodiment of the present invention. As illustrated in FIG. 1, in the fuel battery cell 1, a first electrode 5 is formed on a first insulating film 3 and a second insulating film 4 formed on a semiconductor substrate 2 made of single crystal silicon (Si). The upper surface of the second insulating film 4 is covered with the first electrode 5 and covered with an electrolyte film 6 so as to expose a part of the first electrode 5. A second electrode 7 is formed inside the first electrode 5 and the electrolyte film 6. In the case of the plan view seen from the upper surface, no opening is seen hidden by the first electrode 5 and the second electrode 7, but in the plan view seen from the lower surface (first opening 8 side), the first insulating film 3 having a second opening 9 is seen in the first opening 8 of the semiconductor substrate 2. Since the first insulating film 3 is transparent, a third opening 10 having an area larger than that of the second opening 9 can also be observed. The first electrode 5 and the second electrode 7 serve as an anode or cathode electrode, and are connected to the outside to supply power generated by the fuel battery cell 1 to the outside.

FIG. 2 is a cross-sectional view taken along line A-A in FIG. 1. As illustrated in FIG. 2, the semiconductor substrate 2 has the first opening 8 from which the inside is removed, and has a shape in which a silicon nitride film having, for example, tensile stress is exposed as the first insulating film 3 on the first opening 8. In the first insulating film 3, the second opening 9 is provided so as to communicate with the first opening 8. On the first insulating film 3, for example, a silicon oxide film having a compressive stress is formed as the second insulating film 4, and the third opening 10 having a larger area than the second opening 9 is provided. The third opening 10 communicates with the second opening 9.

The first opening 8 has a rectangular shape in plan view, and the length of one side is about 0.2 mm to 5 mm. The second opening 9 is, for example, circular and has a diameter of about 0.5 µm to 50 µm. The third opening 10 is, for example, circular and has a diameter of about 50 µm to 500 µm. The relationship between the opening areas is the first opening 8 > the third opening 10 > the second opening 9.

The first insulating film 3 and the second insulating film 4 are stacked on the semiconductor substrate 2, and function as a support portion that supports the first electrode 5, an electrolyte film, and the second electrode 7. The first electrode 5 is formed on the second insulating film 4 so as to cover at least the first opening 8. Therefore, the first electrode 5 is exposed to the first opening 8 side in the third opening 10, and has a structure in contact with fuel gas or air. The electrolyte film 6 on the first electrode 5 is disposed so as to cover the first opening 8 and to expose a part of the first electrode 5. The second electrode 7 on the electrolyte film 6 is formed via the electrolyte film 6 so as to cover the first opening 8 and not to be connected to the first electrode 5.

With this structure, the stress due to the thermal expansion of the semiconductor substrate 2 in the environment of the operating temperature is dispersed and applied to the upper and lower films (that is, the first insulating film 3 and a stacked film of the first electrode 5 to the second electrode 7) of the third opening 10. Therefore, even if there is a cavity of the third opening 10, it is not damaged. In addition, since the entire first opening 8 is formed by the first insulating film 3 and the second insulating film 4, and the stacked film of the first electrode 5 to the second electrode 7, the stress due to the thermal expansion of the semiconductor substrate 2 can be mitigated. It is confirmed that when a sample in which the first opening 8, the second opening 9, and the third opening 10 have the same area is prepared, since the electrolyte film 6 has compressive stress with respect to the semiconductor substrate 2, deflection occurs in the stacked film including the electrolyte film 6 in the opening, and there is a problem in heat resistance.

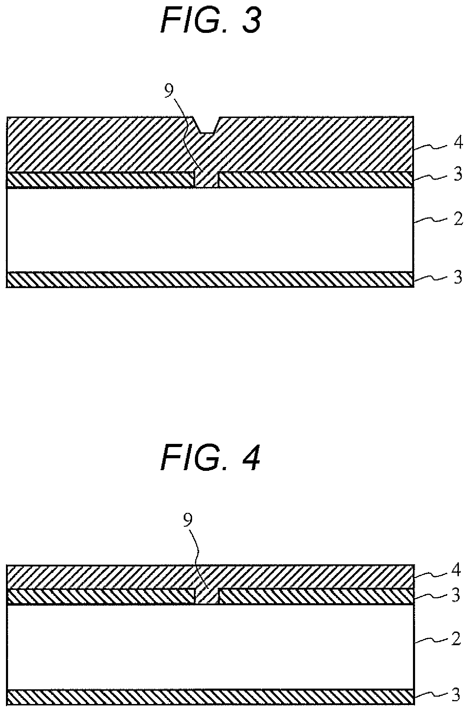

FIG. 3 is a cross-sectional view of a main part taken along line A-A in FIG. 1 in the manufacturing process of the fuel battery cell 1. First, as illustrated in FIG. 3, the semiconductor substrate 2 made of single crystal Si and having a Si <100> crystal orientation is prepared, and the first insulating film 3 is formed. The semiconductor substrate 2 has a thickness of 400 µm or more. As the first insulating film 3, for example, a silicon nitride film having a tensile stress of about 200 nm is formed by a CVD method. In the case of the CVD method, a silicon nitride film having the same thickness is also formed on the back side of the semiconductor substrate 2. Next, patterning is performed on the first insulating film 3 on the front side by using a photolithography technique, and a part of the first insulating film 3 is removed. The region to be removed is a region corresponding to the second opening 9 serving as an inlet/outlet port for fuel gas or air. Next, as the second insulating film 4, a silicon oxide film is formed to be thicker than the first insulating film 3 by using, for example, the CVD method.

FIG. 4 illustrates a next manufacturing process of the fuel battery cell 1. As illustrated in FIG. 4, the first insulating film 3 is planarized by the chemical mechanical polishing (CMP) so as to reduce the step, and a stacked film of the first insulating film 3 and the second insulating film 4 is formed. The film thickness of the second insulating film 4 after the CMP is, for example, about 200 nm.

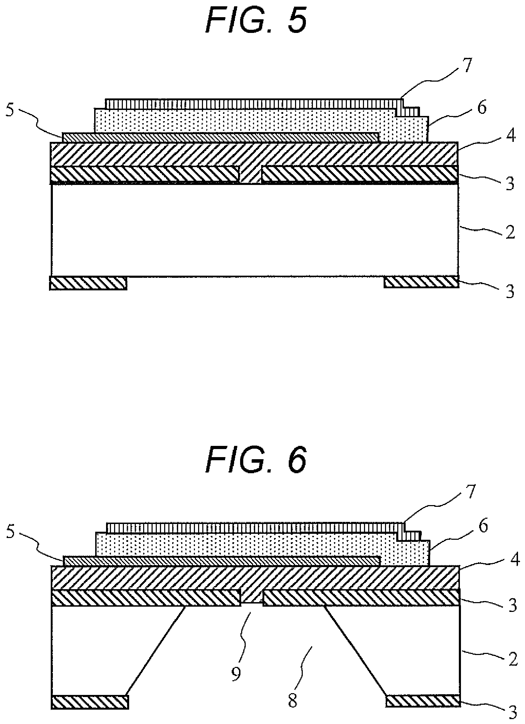

FIG. 5 illustrates a next manufacturing process of the fuel battery cell 1. As illustrated in FIG. 5, a metal film, for example, a platinum film (Pt) is formed in a thickness of about 20 nm by a sputtering method, patterning is performed using a photolithography method, and the first electrode 5 is formed using a dry etching method with an Ar (argon) gas or the like. At this time, in order to improve the adhesive force between the Pt film and the second insulating film 4, it is also desirable to modify the surface of the second insulating film 4 as a base by, for example, about 10 to 15 nm etching by sputter etching with Ar gas before the formation of the Pt film. Alternatively, it is also desirable to form a titanium film (Ti) of about 2 nm as a barrier metal film that assists adhesion. Next, a pattern of a negative resist is formed by a photolithography technique, and a YSZ film (zirconium oxide film containing yttrium) is formed with a thickness of 500 nm or less as the electrolyte film 6 by a sputtering method. In the first embodiment, since the flatness of the second insulating film 4 is good, the crystallinity of the YSZ film is good even through the first electrode 5, and a film with less electron leakage can be obtained even if the YSZ film is formed thin to about 100 nm, for example. Next, for example, a Pt film of about 20 nm is formed by a sputtering method, patterning is performed by a photolithography method, and the second electrode 7 is formed by dry etching with Ar gas. Subsequently, the back surface of the semiconductor substrate 2 is exposed to the first insulating film 3 on the back surface of the semiconductor substrate 2 using a photolithography technique and an insulating film etching technique.

FIG. 6 illustrates a next manufacturing process of the fuel battery cell 1. As illustrated in FIG. 6, with the patterned first insulating film 3 on the back surface of the semiconductor substrate 2 as a mask, the Si film of the semiconductor substrate 2 is removed by wet etching with a KOH (potassium hydroxide) solution or a TMAH (tetramethylamide) solution or dry etching using a fluorine-based gas as a main component to form the first opening 8. Since the first insulating film 3 and the first electrode 5 have a sufficient etching selectivity, the first insulating film 3 and the first electrode 5 remain as an etching stopper even after completion of etching of the semiconductor substrate 2.

Next, the second insulating film 4 inside the second opening 9 and on the second opening 9 is removed by fluorine-based wet etching to form the fuel battery cell 1. Since the wet etching is isotropic, the wet etching proceeds not only on the surface in contact with the second opening 9 but also in the lateral direction, and the area of the third opening 10 can be controlled according to the liquid temperature and time. In addition, the first electrode 5 is provided on the third opening 10, and the electrolyte film 6 is not corroded by forming the first electrode 5 as a metal film having chemical resistance to fluorine-based materials.

The first electrode 5 and the second electrode 7 may be films having excellent fluorine-based chemical resistance, low resistivity, and a melting point higher than the use temperature (for example, 600°C or higher), and examples thereof include a silver film (Ag), a nickel film (Ni), a chromium film (Cr), a palladium film (Pd), a ruthenium film (Ru), and a rhodium film (Rh) in addition to the Pt film.

The first insulating film 3 is not limited to a silicon nitride film, and may be a film having tensile stress with respect to the Si substrate, such as an aluminum nitride film. The second insulating film 4 may be a silicon oxide film containing boron or phosphorus, or a P-TEOS film containing an organic component at a low temperature.

Next, the relationship of the second opening 9 with respect to the third opening 10 serving as a power generation region will be described. As described above, if the first opening 8, the second opening 9, and the third opening 10 have the same area, when one side of the opening is about 300 µm due to the difference in film stress from the semiconductor substrate 2, deflection (upwardly convex shape) of about 6 µm occurs, and film breakage is likely to occur. Therefore, there is a problem that the area of the opening cannot be increased and the power generation output per substrate cannot be increased. Therefore, it is important not to cause deflection in the stacked film of the electrolyte film 6 sandwiched between the electrodes.

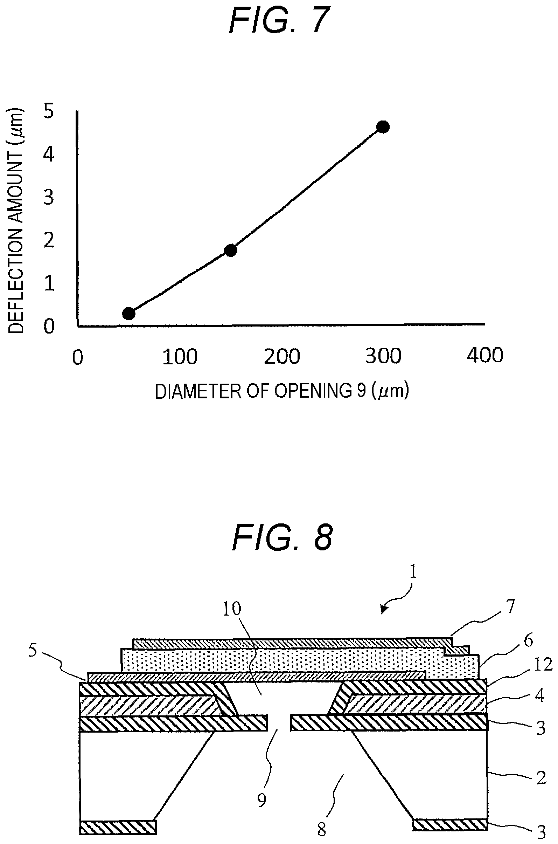

FIG. 7 illustrates a result of evaluating a deflection amount by changing the area of the second opening 9 with respect to the third opening 10. In the sample, one side of the first opening 8 is set to about 500 µm, the diameter of the third opening 10 is set to about 300 µm, and the deflection amount of the film is measured while the second opening 9 is changed to 50 µm, 150 µm, and 300 µm (almost the same area as the third opening 10). As can be seen from this drawing, even if the third opening 10 is the same, the deflection amount decreases as the area of the second opening 9 decreases. In addition, it has also been confirmed that when the sample is heat-treated at 500°C or higher, the smaller the second opening 9 is, the less likely it is to be damaged.

As described above, when the second opening 9 has a small area even if the third opening 10 is provided, the balance of the film stress between the first insulating film 3 and the stacked film of the electrolyte film 6 with the electrode interposed therebetween is maintained, a membrane structure having excellent heat resistance can be formed, and high power generation output can be achieved by increasing the area of the third opening serving as a power generation region.

### <Second Embodiment>

FIG. 8 is a cross-sectional view of the fuel battery cell 1 according to a second embodiment of the present invention. As illustrated in FIG. 8, the first insulating film 3, the first electrode 5, the electrolyte film 6, and the second electrode 7 are the same as those in the first embodiment. The difference from the first embodiment is that the second insulating film 4 and a third insulating film 12 are stacked on the first insulating film 3, and the side wall shape of the third opening 10 becomes wider from the first insulating film 3 toward the first electrode 5.

In manufacturing the structure of FIG. 8, after the second insulating film 4 is formed, the second insulating film 4 is processed into a tapered shape by wet etching, and then, for example, a silicon nitride film is formed as the third insulating film 12, and the side wall is covered so that the second insulating film 4 is not exposed in the third opening 10. Thereafter, although not illustrated, a silicon oxide film is formed as a sacrificial film above the step, and planarization is performed by CMP with the third insulating film 12 as a stopper. The processes of forming the first electrode 5, the electrolyte film 6, and the second electrode 7, and forming the first opening 8 on the back surface are the same as those in the first embodiment.

By preventing the second insulating film 4 from being exposed in the third opening 10, even if the time of fluorine-based wet etching after the formation of the first opening 8 is lengthened, the second insulating film 4 is stopped by the third insulating film 12 and does not spread outward. Therefore, the third opening 10 can be manufactured in a constant area in the wafer or between the wafers. Since the variation in power generation output can be reduced by suppressing the variation in the third opening 10, it is possible to save time and effort for adjustment when the fuel battery cell 1 is connected in series or in parallel and supplied to the outside. In addition, the film strength in the first opening 8 can be improved by providing the third insulating film 12, and the third opening 10 can be widened by providing the taper, so that the power generation output can be expected to be improved.

In the second embodiment, the third opening 10 has a tapered side wall. However, even when the second insulating film 4 is processed by dry etching to have a substantially vertical structure of 85° or more, a similar effect can be obtained by improving the coverage of the third insulating film 12. The third insulating film 12 preferably has fluorine-based wet etching resistance and tensile stress, and may be an aluminum nitride film or the like.

### <Third Embodiment>

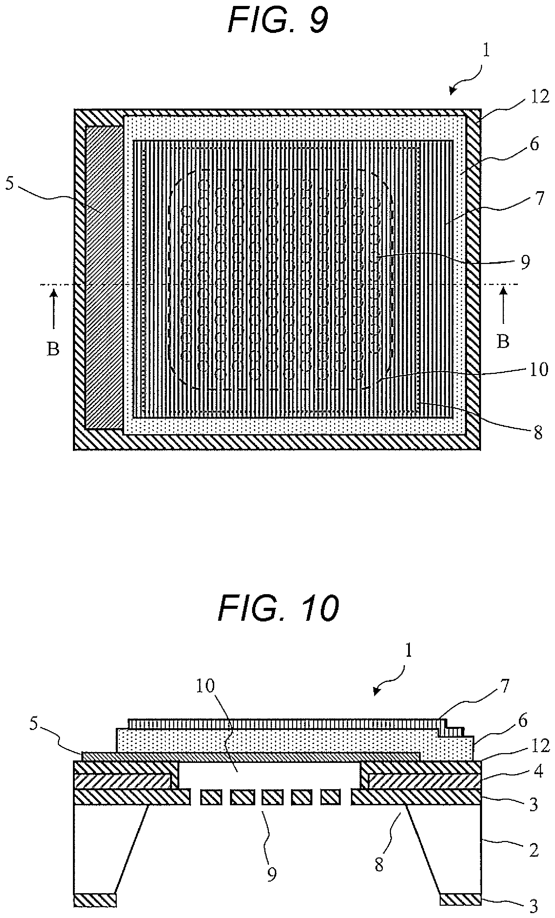

FIG. 9 is a plan view of the fuel battery cell 1 according to a third embodiment of the present invention. As illustrated in FIG. 9, in plan view from the upper surface, the shapes of the first electrode 5, the electrolyte film 6, and the second electrode 7 are the same as those in the first and second embodiments. However, when viewed from the lower side, a plurality of circular second openings 9 having a small area is arranged in the first insulating film 3 in the first opening 8, and the first electrode 5 appears to be exposed in the second opening 9.

The first opening 8 has a rectangular shape in plan view, and a length of one side is, for example, about 500 µm. For example, it is desirable that the second opening 9 has a circular shape having a diameter of about 1 µm, and the second openings 9 adjacent to each other are arranged so as to be substantially equal to each other at a distance of about 1 µm. The opening size of the third opening 10 is formed to the outside of both outermost ends of the plurality of aligned second openings 9. The planar shape of the third opening 10 may not be a straight line, but is close to a rectangle and has a side length of about 300 µm. The relationship between the opening areas is the first opening 8 > the third opening 10 > the second opening 9, which is the same as that in the first and second embodiments.

FIG. 10 is a cross-sectional view taken along line B-B in FIG. 9. In FIG. 10, as compared with the second embodiment, in the fuel battery cell 1, a plurality of second openings 9 are formed side by side in the first insulating film 3, and the opening size of the third opening 10 formed in the second insulating film 4 thereon is larger than the outermost ends of the plurality of second openings 9. Similarly to the second embodiment, the third opening 10 is formed by removing the second openings 9 adjacent to each other and a silicon oxide film (not illustrated) serving as a sacrificial layer on the upper surface at the time of fluorine-based wet etching after forming the first opening 8. Therefore, the third opening 10 can be enlarged to the outside of the second opening 9, the side wall of the third opening 10 is stopped by the third insulating film 12, and the area of the third opening 10 can be made constant. This can reduce variations in power generation output. When the interval between the adjacent second openings 9 is narrowed, the etching time can be shortened, the inflow and outflow of the gas can be further enhanced, and the power generation output can be further stabilized.

In the fuel battery cell of the third embodiment, the substantial opening area through which the fuel gas flows in and out can be widened by arranging the plurality of second openings 9, so that the gas flows in and out from the first opening 8 side into the third opening 10 more easily than the fuel battery cell 1 of the first and second embodiments, and the stable power generation output can be obtained.

### <Fourth Embodiment>

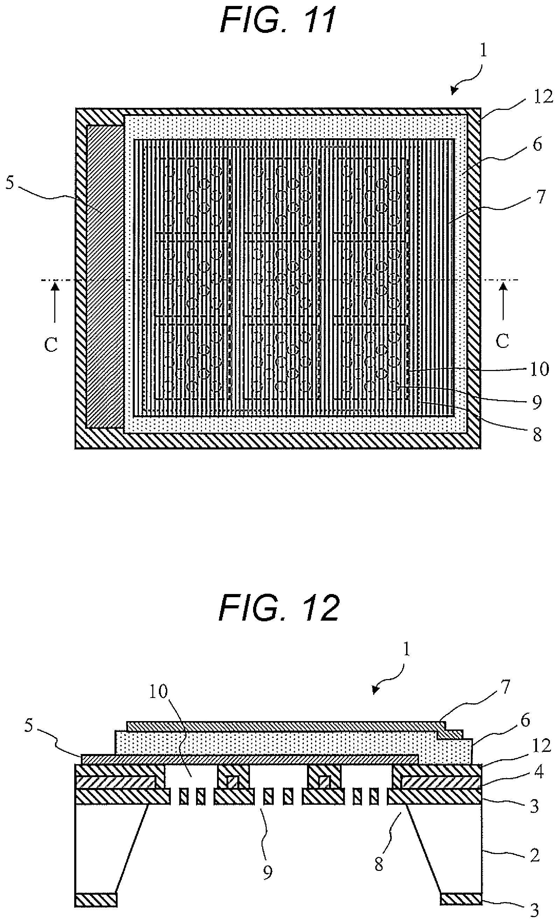

FIG. 11 is a plan view of the fuel battery cell 1 according to a fourth embodiment of the present invention. As illustrated in FIG. 11, in plan view from the upper surface, the shapes of the first electrode 5, the electrolyte film 6, and the second electrode 7 are the same as those in the third embodiment. However, when viewed from the lower side, a plurality of circular second openings 9 having a small area is arranged in the first insulating film 3 in the first opening 8, and the first electrode 5 appears to be exposed in the second opening 9. The difference from the third embodiment is that there are a plurality of third openings 10.

The first opening 8 has a rectangular shape in plan view, and has a side length of about 5 mm, for example. For example, it is desirable that the second opening 9 has a circular shape having a diameter of about 1 µm, and the second openings 9 adjacent to each other are arranged so as to be substantially equal to each other at a distance of about 1 µm. The third openings 10 each have a rectangular shape with a side length of about 300 µm, and an interval between the third openings 10 is about 100 µm. The relationship between the opening areas is the first opening 8 > the third opening 10 > the second opening 9, which is the same as that in the first and second embodiments.

In FIG. 11, the shape of the third opening 10 is rectangular, but by forming the third opening into a polygonal shape such as a circular shape or a hexagonal shape, the third opening is efficiently spread in the first opening 8 to increase the area of the power generation region, and the power generation output can be increased.

FIG. 12 is a cross-sectional view taken along line C-C in FIG. 11. In FIG. 12, as compared with the third embodiment, in the fuel battery cell 1 according to the fourth embodiment, as described above, the plurality of third openings 10 in which the plurality of second openings 9 are arranged are formed in the first insulating film 3. As with the third embodiment, the third insulating film 12 is disposed on the side wall of the third opening 10, so that the area of the third opening 10 can be made constant, and variation in power generation output can be reduced. In addition, the area of the power generation region can be further widened by changing the shape of the third opening 10 to a hexagonal shape or the like and narrowing the interval while considering the stress of the entire first opening 8, and high power generation output can be achieved.

The fuel battery cell according to the fourth embodiment has a structure in which the plurality of third openings 10 in the third embodiment are provided in the first opening 8. As a result, the contact area between the gas and the first electrode 5 is increased, and a high power generation output can be obtained.

### <Fifth Embodiment>

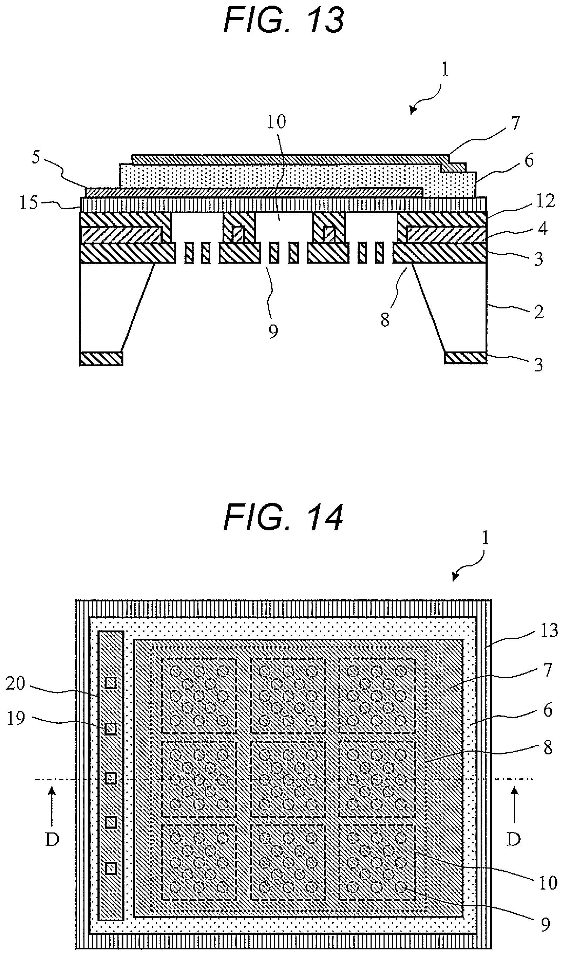

FIG. 13 is a cross-sectional view of the fuel battery cell 1 according to a fifth embodiment of the present invention. The fuel battery cell according to the fifth embodiment has a stress adjustment film 15 between the third opening 10 and the first electrode 5. As illustrated in FIG. 13, the shape of the third opening 10 is the same as that of the third embodiment, but the stress adjustment film 15 is formed so as to cover at least the third opening 10. The stress adjustment film 15 is formed of, for example, aluminum nitride or the like, has a columnar crystal structure in which a grain boundary extends along a film thickness direction, has a thin film thickness of about 50 nm, is a continuous film, and is a film through which fuel gas, air, or the like passes. The stress adjustment film 15 is a fluorine-based film having tensile stress with respect to the semiconductor substrate 2 and excellent chemical resistance, and has a good stress balance with the electrolyte film 6 having compressive stress while maintaining power generation output, and heat resistance is improved.

### <Sixth Embodiment>

FIG. 14 is a plan view of the fuel battery cell 1 according to a sixth embodiment of the present invention. As illustrated in FIG. 14, in order to dispose the output terminals to the outside of a fuel battery cell 21 in the sixth embodiment at the same height, a third electrode 20 and the second electrode 7 are separately formed as the same layer on the electrolyte film 6. The third electrode 20 is disposed so as to be fitted in a contact hole 19 formed in the electrolyte film 6. When viewed from the lower surface (first opening 8 side) of the fuel battery cell 21, a plurality of second openings 9 are disposed in the first opening 8, and the first electrode 5 is exposed through the third opening 10. A plurality of third openings 10 are also arranged, which is similar to that in the fourth embodiment.

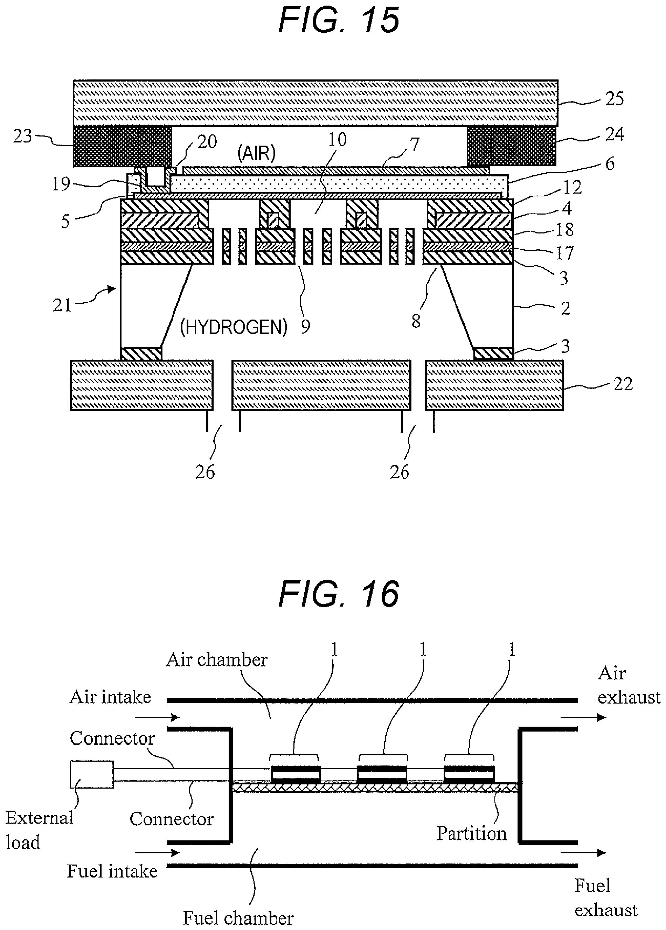

FIG. 15 is a cross-sectional view taken along line D-D in FIG. 14. As illustrated in FIG. 15, in the cross-sectional structure of the fuel battery cell 1, the first opening 8 is formed in the semiconductor substrate 2, the first insulating film 3, a fourth insulating film 17, and a fifth insulating film 18 are continuously formed thereon, and the second opening 9 is provided so as to penetrate the first insulating film 3, the fourth insulating film 17, and the fifth insulating film 18. The fourth insulating film 17 is, for example, a silicon oxide film having a compressive stress, and the fifth insulating film 18 is, for example, a silicon nitride film having a tensile stress. By stacking the film having tensile stress and the film having compressive stress, the overall film strength on the first opening 8 is improved. Further, the balance of the film strength with the stacked film of the first electrode, the electrolyte film 6, and the second electrode 7 on the third opening 10 is improved, and the heat resistance is improved.

The electrolyte film 6 is formed so as to cover the first electrode 5, and after only a part of the contact hole 19 is processed for external output, the third electrode 20 is formed on the same layer as the second electrode 7. The first electrode 5 and the third electrode 20 are connected by the plurality of contact holes 19 formed, and are separated from the second electrode 7.

Next, module attachment of the fuel battery cell 1 will be described. For example, when hydrogen gas is supplied to the back surface side where the first opening 8 of the fuel battery cell 1 is provided, a lower pedestal 22 made of ceramic or metal is provided in order to form a gas flow path, and confidentiality is maintained using an adhesive or sealing material. A gas pipe 26 for inflow and outflow of gas is connected to the pedestal 22, and is connected to the first opening 8. An upper lid substrate 25 provided with wirings 23 and 24 is placed on an upper side where electrode terminals of the fuel battery cell 1 are located in order to form an air flow path. The material of the upper lid substrate 25 is also ceramic or metal. The wiring 23 is connected to the third electrode 20, and the wiring 24 is connected to the second electrode 7. The wiring 23 and the wiring 24 can be connected to a device that consumes power from the fuel battery cell 21 via a device that controls power generation (not illustrated) or the like. Of course, on the upper lid substrate 25, the wirings 23 and 24 are separated from each other and are not electrically connected to each other. A pipe for introducing gas different from the first opening 8 may be connected to the upper lid substrate 25.

The height from the semiconductor substrate 2 to the upper surface of the third electrode 20 is substantially equal to the height from the semiconductor substrate 2 to the upper surface of the second electrode 7. As a result, the contact between the third electrode 20 and the wiring 23 is improved, the contact between the second electrode 7 and the wiring 24 is improved, and the power generation loss can be reduced. Since these heights are substantially equal, the air flow path can be hermetically sealed by the upper lid substrate 25. Further, since the fuel battery cell 1 serves as a partition wall so that hydrogen gas and air are not mixed, and the output electrode is provided on the side to which air is supplied, there is no possibility that the electrode (the first electrode 5 or the second electrode 7) is corroded, and there is no possibility that hydrogen gas is ignited.

The fuel battery cell 21 is bonded onto the upper lid substrate 25, and the upper lid substrate 25 is stacked thereon. Therefore, the plurality of the fuel battery cell 1 are stacked, so that the power generation amount can be improved. In this case, a flow path for supplying hydrogen gas is formed on the upper surface (the surface facing the surface to which air is supplied) side of the upper lid substrate 25, similarly to the pedestal 22. The pedestal 22 and the upper lid substrate 25 need to be fastened from the outside with a jig or the like on the upper and lower sides in order to maintain confidentiality. At this time, when the heights of the third electrode 20 and the second electrode 7 are non-uniform, there is a possibility that a load is applied to the fuel battery cell 1 and the fuel battery cell 1 is damaged, but this can be avoided in the sixth embodiment. In addition, it is possible to design such that thermal stress is uniformly applied at the time of operation. In addition, in order to mitigate stress when a pressing force is applied to the electrodes of the fuel battery cell 1 and the upper lid substrate 25 and the semiconductor substrate 2 other than the first opening 8, a stretchable cushioning material with heat resistance may be disposed.

### <Seventh Embodiment>

FIG. 16 is a side cross-sectional view for explaining a configuration of a fuel battery cell system according to a seventh embodiment of the present invention. The fuel battery cell 1 has been described in any one of the first to sixth embodiments. The fuel battery cell 1 is arranged in an array, and an air chamber is formed above the fuel battery cell 1. Air is introduced into the air chamber through an air introduction port and discharged from an air exhaust port. The fuel chamber is formed below the fuel battery cell 1. Fuel gas is introduced into the fuel chamber through a fuel introduction port and discharged from a fuel discharge port. The fuel battery cell 1 is connected to an external load via a connection portion.

### <Modifications of the present invention>

The present invention is not limited to the embodiments described above, and may include various modifications. For example, the above embodiments of the present invention are described in detail to explain in a clearly understandable way, and are not necessarily limited to those having all the described configurations. In addition, some of the configurations of a certain embodiment may be replaced with the configurations of the other embodiments, and the configurations of the other embodiments may be added to the configurations of a certain embodiment. In addition, some of the configurations of each embodiment may be omitted, replaced with other configurations, or added to other configurations.

In the above embodiments, it is described that the relationship between the opening areas is the first opening 8 > the third opening 10 > the second opening 9. It is to be noted that the opening area here is an opening area when viewed from below in FIG. 2 (that is, when viewed in a direction from the first opening 8 to the third opening 10).

### Reference Signs List

- 1: fuel battery cell
- 2: semiconductor substrate
- 3: first insulating film
- 4: second insulating film
- 5: first electrode
- 6: electrolyte film
- 7: second electrode
- 8: first opening
- 9: second opening
- 10: third opening
- 12: third insulating film
- 15: stress adjustment film
- 17: fourth insulating film
- 18: fifth insulating film
- 19: contact hole
- 20: third electrode
- 22: pedestal
- 23: wiring
- 24: wiring
- 25: upper lid substrate
- 26: gas pipe

## Claims

1. A fuel battery cell comprising:
a support substrate having a first opening;
a first insulating film having a second opening communicating with the first opening and disposed on the support substrate;
a second insulating film having a third opening communicating with the second opening and disposed on the first insulating film;
a first electrode disposed on the second insulating film;
an electrolyte film disposed on the first electrode; and
a second electrode disposed on the electrolyte film,
wherein an opening area of the first opening is larger than an opening area of the second opening, and
an opening area of the third opening is larger than the opening area of the second opening.

2. The fuel battery cell according to claim 1, wherein
the first electrode is disposed at a position covering the second opening and the third opening.

3. The fuel battery cell according to claim 1, wherein
an opening area of the third opening on the support substrate side is smaller than an opening area of the third opening on the first electrode side.

4. The fuel battery cell according to claim 1, wherein
the fuel battery cell further comprises a third insulating film disposed on a boundary surface between the second insulating film and the first electrode and covering a side wall of the third opening.

5. The fuel battery cell according to claim 1, wherein
the first insulating film has a plurality of the second openings, and
sizes of both ends of the plurality of second openings are smaller than an opening size of the third opening.

6. The fuel battery cell according to claim 4, wherein
the first insulating film has a plurality of the second openings, and
sizes of both ends of the plurality of second openings are smaller than a size from a surface of the third insulating film covering one of side walls of the third opening to a surface of the third insulating film covering the other side wall.

7. The fuel battery cell according to claim 1, further comprising
a third insulating film that is disposed on a boundary surface between the second insulating film and the first electrode and divides the third opening into a plurality of sections.

8. The fuel battery cell according to claim 7, wherein
the first insulating film has the second opening for each section of the third opening.

9. The fuel battery cell according to claim 7, wherein
the first insulating film has two or more of the second openings for each section of the third opening.

10. The fuel battery cell according to claim 1, further comprising
a stress adjustment layer disposed between the first electrode and the second insulating film and covering the third opening, wherein
the stress adjustment layer has a columnar crystal structure having tensile stress with respect to the support substrate and having a grain boundary extending along a direction parallel to a film thickness direction.

11. The fuel battery cell according to claim 1, wherein
the electrolyte film has a contact hole, and
the fuel battery cell further comprises a third electrode in contact with the first electrode by being fitted into the contact hole.

12. The fuel battery cell according to claim 11, wherein
a distance from the support substrate to an uppermost surface of the third electrode and a distance from the support substrate to an uppermost surface of the second electrode are configured such that a space between the second electrode and a lid member is hermetically sealed when the fuel battery cell is covered with the lid member.

13. The fuel battery cell according to claim 1, further comprising:
between the first electrode and the support substrate,
a layer having a compressive stress with respect to the support substrate; and
a layer having tensile stress with respect to the support substrate.

14. The fuel battery cell according to claim 1, wherein
the first insulating film has tensile stress.

15. A method for manufacturing a fuel battery cell, the method comprising:
a step of forming a support substrate;
a step of forming a first insulating film on the support substrate;
a step of forming a second opening penetrating the first insulating film;
a step of forming a second insulating film on the first insulating film;
a step of planarizing the second insulating film;
a step of forming a first electrode on the second insulating film;
a step of forming an electrolyte film on the first electrode;
a step of forming a second electrode on the electrolyte film;
a step of forming a first opening communicating with the second opening on a surface of the support substrate on a side not in contact with the first insulating film; and
a step of forming a third opening communicating with the second opening in the second insulating film.
